# DEMANDE DE BREVET EUROPEEN

(11) **EP 1 288 782 A1**
(43) Date de publication de la demande: **05.03.2003**
(21) Numéro de dépôt: 02292107.6
(22) Date de dépôt: 27.08.2002
(51) Int. Cl.: G06F 13/14

(54) **Dispositif de configuration d'un module électronique et réseau à bus multiplexé à plusiers lignes**

(30) Priorité: 30.08.2001 FR 0111397
(71) Demandeur: VALEO VISION, 93012 Bobigny Cédex (FR)
(72) Inventeur: Cara, Hervé, 93012 Bobigny Cedex (FR)
(74) Mandataire: Renous Chan, Véronique

(57) **Abrégé**

La présente invention concerne un dispositif de configuration d'un module électronique. Elle concerne aussi un réseau à bus multiplexé à plusieurs lignes sur lequel plusieurs modules électroniques sont disposés, chacun étant équipé d'un tel dispositif de configuration.

Chaque module comporte un connecteur (59) tel qu'une ligne du bus (51) peut être connectée à au moins l'une de plusieurs bornes du connecteur qui lui sont réservées. La détection des bornes connectées à ladite ligne de bus assure le codage d'une adresse unique pour chacun des modules du réseau (55 - 58).

## Description

La présente invention concerne un dispositif de configuration d'un module électronique. Elle concerne aussi un réseau à bus multiplexé à plusieurs lignes sur lequel plusieurs modules électroniques sont disposés, chacun étant équipé d'un tel dispositif de configuration.

Dans l'état de la technique, on connaît des réseaux de modules électroniques qui sont connectés les uns aux autres, et souvent à une station centrale par l'intermédiaire d'un bus comportant une pluralité de lignes de signaux et/ou de tension d'alimentation. C'est particulièrement le cas de modules électroniques dédiés au contrôle d'actionneurs électriques dans un véhicule équipé d'un ordinateur de bord, comme des serrures électriques de portes, des orienteurs de projecteurs, etc.

Dans un tel réseau, le bus comporte un conducteur pour transmettre une tension électrique positive issue de la batterie du véhicule, un conducteur de masse électrique et un ou plusieurs conducteurs pour transiter des messages numériques, directement ou sous forme de modulation selon un protocole déterminé de sorte que dans le temps, une succession de messages transmettant des ordres du contrôleur de bus ou du module électronique maître soit attribué à l'un déterminé des modules électroniques, qui peut lui-même retourner des messages d'acquittement, des messages d'état au contrôleur de bus ou au module électronique maître. En réponse de ces échanges, le module électronique exécute les tâches pour lesquelles il est programmé comme le démarrage ou l'arrêt d'un actionneur électrique qui lui est connecté, ainsi que des fonctions locales de protection de l'actionneur comme le contrôle de paramètres électriques de fonctionnement, notamment.

Pour échanger des messages sur le réseau, chaque module électronique doit recevoir un nom qui l'identifie dans le réseau.

Dans l'état de la technique, on a déjà proposé de nombreuses solutions pour attribuer par exemple lors de la connexion du module électronique au réseau un code unique qui permet au module électronique de s'insérer dans le protocole de communication sur le réseau.

En particulier, on connaît une première technique selon laquelle un premier détrompeur mécanique est monté sur le module électronique de sorte que le montage du module n'est autorisé qu'à un emplacement prévu sur le réseau. Le premier détrompeur peut être monté sur un premier connecteur, par exemple un connecteur femelle, solidaire du module électronique. Un second détrompeur mécanique, réciproque du premier détrompeur, est monté sur un second connecteur, par exemple mâle et connecté à l'extrémité libre d'un faisceau de conducteurs dont l'autre extrémité est électriquement connectée au réseau. Le second connecteur, par exemple mâle, permet de venir connecter le module électronique au réseau. Les premier et second détrompeurs sont configurés de telle sorte que, parmi tous les modules qu'il a été prévu de connecter sur le réseau, un seul d'entre eux se connecte sur le second connecteur. L'adresse du module électronique est alors réalisée de manière figée par sa position de connexion dans le réseau.

Dans un autre état de la technique, l'adressage d'un module est réalisé par des conducteurs du faisceau qui sont réservés à une fonction d'adressage. A cet effet, le bus comporte p fils réservés à l'adressage de 2p modules si le codage d'adresse est de type binaire. Un circuit de décodage d'adresses, disposé sur le module électronique et qui lit les p bornes du premier connecteur solidaire du module et qui sont connectées aux p lignes d'adressage du bus, permet de connaître à chaque instant l'adresse que le réseau attribue au module électronique et donc, de distinguer les modules les uns des autres.

Dans un autre état de la technique, l'adressage d'un module électronique est réalisé à l'aide de résistances électriques, connectées entre l'alimentation positive et la masse électrique fournies par le bus, et d'un circuit de mesure des courants qui traversent les résistances. Le circuit de mesure des courants produit, lors de son fonctionnement, des signaux de mesure qui dépendent des valeurs des résistances et donc, par un choix approprié de ces valeurs, il est possible de coder de manière unique chaque module électronique du réseau et de disposer à chaque instant de son identification.

Enfin, dans un dernier état de la technique, l'adressage d'un module électronique est réalisé selon une méthode par programmation qui consiste à écrire un numéro d'identification dans un registre inscriptible une fois, par exemple lors de la fabrication ou lors du montage du module électronique sur le réseau, de façon à ce que le module électronique soit toujours reconnu sous ce numéro d'identification dans le réseau et son protocole.

Les inconvénients de ces divers états de la technique résident dans le caractère figé de l'identification de chaque module pour les solutions les plus mécaniques, et dans la complexité d'un tel adressage, généralement subi par un organe de gestion du protocole et/ou du réseau pour désigner de manière adaptative un tel adressage pour les solutions les plus électroniques.

La présente invention apporte un remède à cet état de la technique en ce qu'elle concerne un dispositif de configuration d'un module électronique dans un réseau du genre comportant un bus multiplexé à plusieurs lignes, et qui se caractérise principalement en ce qu'il comporte :
- un connecteur comportant, pour au moins une ligne du bus multiplexé, un nombre déterminé de bornes dont seul un sous-ensemble est connecté à ladite ligne ;
- un circuit pour reconstituer la ligne connectée au dit sous-ensemble de bornes, et la connecter au reste du module ;
- un circuit pour détecter les positions relatives des bornes connectées dans le dit sous-ensemble de bornes ; et
- un circuit pour générer une donnée numérique unique, sur la base de la détection des positions relatives des bornes connectées, identifiant le module électronique.

L'invention concerne aussi un réseau à bus multiplexé à plusieurs lignes.

Le réseau de l'invention comporte une pluralité de modules électroniques, chaque module électronique comportant un dispositif de configuration selon l'invention.

D'autres avantages et caractéristiques de la présente invention seront mieux compris à l'aide de la description et des figures annexées parmi lesquelles :
- les figures 1 à 3 expliquent un premier état de la technique;
- la figure 4 explique un second état de la technique;
- la figure 5 représente un schéma bloc expliquant un mode préféré de réalisation d'un dispositif de configuration selon l'invention;
- la figure 6 représente un schéma bloc expliquant un mode particulier de réalisation d'un réseau à bus multiplexé à plusieurs lignes selon l'invention;
- la figure 7 représente un schéma bloc expliquant un autre mode de réalisation d'une partie d'un réseau selon l'invention ;
- les figures 8 et 9 représentent un mode particulier de réalisation d'un circuit du dispositif de configuration de l'invention ;
- les figures 10 et 11 : deux vues d'un montage montrant un mode de réalisation d'une partie de l'invention.
   A la figure 1, on a représenté un schéma bloc d'un premier état de la technique. Un faisceau 1 d'un bus multiplexé comporte ici trois lignes de signaux et de tensions d'alimentation du réseau qui sont respectivement
- la ligne 4, une ligne portée à un potentiel électrique positif d'alimentation électrique continue,
- la ligne 5, une ligne portée à un potentiel électrique négatif d'alimentation électrique continue,
- la ligne 6, une ou plusieurs lignes de signaux numériques multiplexés dans le temps selon un protocole particulier.

Le faisceau 1 est électriquement connecté à un connecteur 3 solidaire d'un module électronique 2 connecté au réseau par le faisceau 1. Le module électronique 2 comporte un circuit 7 générateur de polarisation continue à destination des autres circuits électroniques et électriques du module 2. Le circuit 7 générateur de tension de polarisation est connecté par des lignes 9 et 10 aux bornes du connecteur 3 électriquement reliées aux lignes 4 et 5 sur le faisceau 1. Des lignes 11 et 12 de sortie du circuit 7 sont disposées pour transmettre la polarisation électrique convenable à un circuit 8 inséré dans le module 2.

Le circuit 8 est un circuit d'exploitation des signaux d'information qui sont prélevés sur le connecteur 3 par la ligne 13 qui amène les signaux d'informations sur le circuit d'utilisation 8.

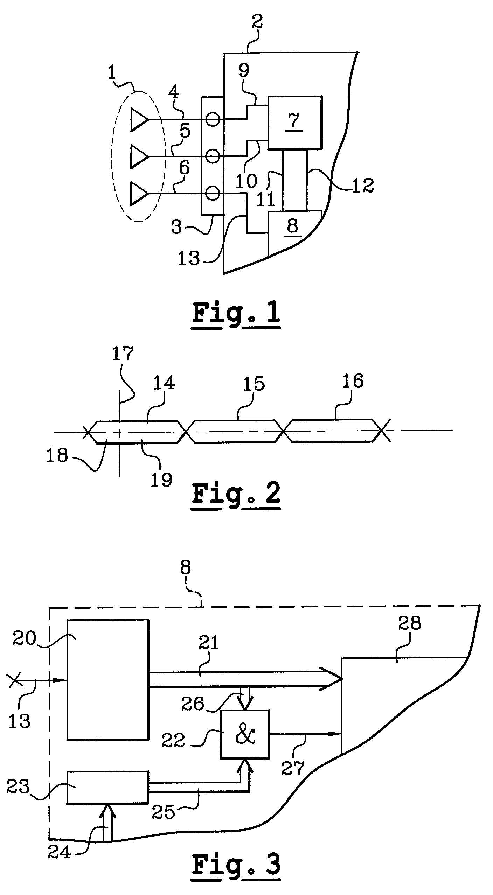

A la figure 2, on a représenté schématiquement la configuration des signaux transitant sur le bus multiplexé sur lequel est connecté le faisceau 1. Le chronogramme des signaux représentés à la figure 2 comporte une pluralité de trames 14, 15 et 16 de période prédéterminée. Chaque trame est partagée en deux parties par un instant 17 par rapport au début de la trame de sorte qu'une première partie 18 de la trame contienne une donnée d'identification du module électronique connecté au réseau et qui est destinataire du message 19 issu du réseau ou émetteur du message 19 issu du module électronique 2. La division des trames est répétée de trame en trame.

Le code contenu dans la partie de trame 18 peut comporter l'adressage d'un sous-ensemble de modules électroniques.

Le message contenu dans la partie de trame 19 peut comporter des ordres de contrôle de dispositifs électromécaniques comme des actionneurs qui sont commandés par le module électronique destinataire du message contenu dans la trame 14.

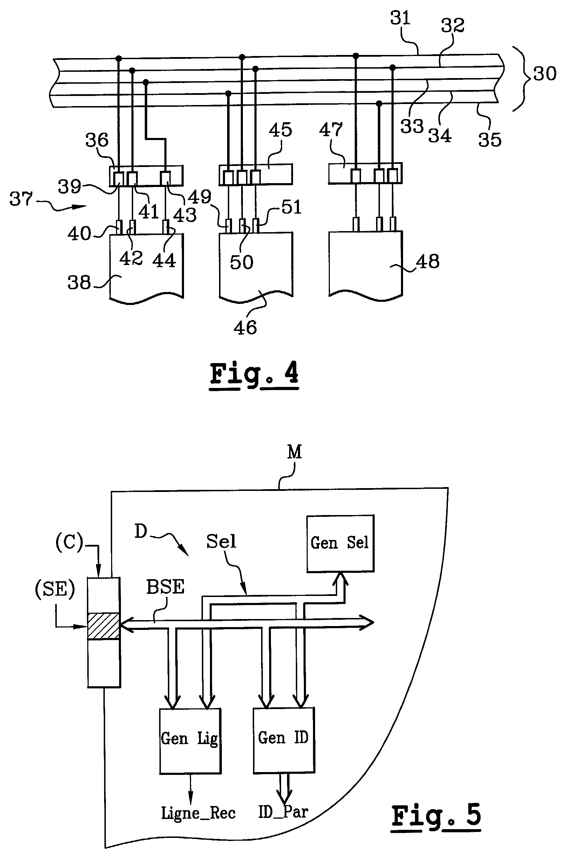

A la figure 3, on a représenté schématiquement un circuit permettant de détecter le code d'un message d'un numéro d'identification du module 2.

Le module électronique est connecté à une ligne 13 par une borne d'entrée d'un circuit 20 qui permet de séparer la trame 14 (figure 2) en deux parties, la partie d'identification 18 et la partie de message 19. Ces deux parties sont envoyées successivement sur un bus de sortie 21 interne au module 2.

La première partie 18 du message est prélevée sur le bus interne 21 par un bus 26 qui est connecté à une première entrée d'un comparateur 22 dont une deuxième entrée est connectée par un bus interne 25 à un registre 23 qui contient un numéro d'identification unique du module électronique 2.

Le numéro d'identification enregistré dans le registre 23 est comparé à la donnée présentée à la première entrée 26 du comparateur 22 de sorte que lorsque les deux entrées coïncident, un signal est activé à la sortie 27 du comparateur 22 qui est connectée à un circuit d'utilisation 28 qui reçoit aussi la trame 14 par le bus 21. De la sorte, le module 2 est capable de savoir qu'il est destinataire du message 19 contenu dans la trame 14. Le mécanisme peut fonctionner aussi en mode émetteur et ne sera pas plus décrit ici.

Cependant, on note que le registre 23 doit recevoir par un mécanisme d'inscription ou d'enregistrement par un bus d'écriture 24 dans le registre 23 au code d'identification du module 2.

Un tel mécanisme alourdi les problèmes techniques de la gestion des réseaux de communication sur bus multiplexé, problème que la présente invention vise à résoudre.

A la figure 4, on a représenté un autre état de la technique dans lequel le bus multiplexé 30 comporte une pluralité de lignes de signaux et de tensions d'alimentation qui sont respectivement, dans l'exemple de réalisation de la figure 4 :
- des lignes 31 et 32, une tension positive d'alimentation et une masse électrique destinées à engendrer localement des polarisations électriques pour les modules électroniques connectés au réseau ;
- des lignes 33, 34 et 35 de signaux qui sont réservées chacune à une pluralité de modules particuliers.

Dans cet état de la technique, chaque module 38, 46, 48 porte un connecteur femelle, référencé 37 pour le module électronique 38 qui est destiné à s'adapter de manière univoque à un connecteur mâle 36 connecté par les fils convenables d'un faisceau au bus 30. Le connecteur 36 ne peut se connecter que sur le seul connecteur 37 du module 38.

En effet, le connecteur femelle 37, comme les connecteurs femelles 45 et 47 dessinés, comporte une pluralité de bornes, respectivement 39, 41 et 43, qui sont disposées en regard des bornes 40, 42 et 44 du connecteur mâle 36 du module 38 selon une première répartition géométrique.

Le connecteur mâle (non référencé) associé au module électronique 46, comporte une autre répartition géométrique de bornes respectivement 49 - 51. On remarque que la répartition géométrique des bornes de la paire de connecteurs 36 et 37 est incompatible avec la répartition géométrique des bornes des autres paires de connecteurs. De la sorte, il est impossible de connecter le module 46 sur le connecteur femelle 36 ou sur le connecteur femelle 47 et de même pour les autres modules électroniques.

Il en résulte que le module 38 est toujours reconnu parfaitement dans la connexion au bus 30, surtout si le signal est destiné essentiellement au module 38 par la réservation de la ligne 33 pour le module 38, 34 pour le module 46, et 35 pour le module 48.

Cependant, on constate que cette situation ne permet pas d'envisager de connecter un nombre important de modules électroniques sur un même bus, autre problème que la présente invention vise à résoudre.

A la figure 5, on a représenté un mode de réalisation préféré d'un dispositif de configuration destiné à s'adapter aux modules électroniques pour former un réseau selon l'invention.

Chaque module électronique M destiné au réseau de l'invention comporte un dispositif de configuration D qui est connecté à un connecteur C qui comporte une pluralité de bornes destinées à se connecter aux fils ou lignes du bus du réseau sur lequel le module électronique est destiné à venir se connecter.

Un sous-ensemble SE de bornes du connecteur C est réservé à la connexion d'une ligne particulière du bus du réseau concerné. A la différence de l'invention, dans l'état de la technique, on remarque qu'une seule borne est prévue pour chaque ligne de bus. Selon l'invention, il en résulte que pour cette ligne du bus, il existe une pluralité de possibilités de connexion pour sur chacune des p bornes du sous-ensemble SE de bornes du connecteur C, les p bornes pouvant ne pas être toutes contiguës sur le connecteur C. De la même façon, chaque ligne du bus, ou plusieurs d'entre elles seulement, peut se voir attribuer un sous-ensemble particulier de bornes sur le connecteur C.

Chaque sous-ensemble de bornes SE réservé à une ligne particulière est connecté par un bus interne de chaque module électronique M, le bus étant référencé BSE à la figure 5, de sorte que ces signaux soient distribués respectivement à un circuit de reconstitution de lignes Gen Lig et à un générateur de paramètre d'identification Gen ID.

De plus, le dispositif de configuration de l'invention comporte un générateur de signaux de sélection Gen Sel qui est connecté par un bus Sel aux entrées convenables respectivement du circuit de reconstitution de lignes Gen Lig, d'une part, et du circuit générateur de paramètre d'identification Gen ID.

Le circuit de reconstitution de lignes Gen Lig permet que la ligne du bus qui est connectée au sous-ensemble de bornes SE du connecteur C soit transmise au reste du module sous forme d'une seule ligne Ligne_Rec, représentée à la sortie du circuit de reconstitution de lignes Gen Lig.

Dans un mode de réalisation, le circuit Gen Lig comporte un circuit dans lequel N entrées qui sont toutes au même potentiel ou à un potentiel flottant sont rassemblées en une seule ligne de sortie. Un tel rassemblement de lignes identiques ou placées à un potentiel flottant se fait avec un circuit de combinaison à diodes pour protéger les entrées.

Le circuit générateur de paramètre d'identification Gen ID du dispositif de configuration D du module électronique M comporte un circuit de détection des bornes connectées dans le sous-ensemble de bornes SE du connecteur C de sorte que un numéro d'identification ID_Par est généré de manière unique.

Pour réaliser une telle fonction, le dispositif de configuration comporte aussi un générateur d'ordre de sélection Gen Sel qui interroge séquentiellement chacune des bornes du sous-ensemble de bornes SE. Le générateur de paramètre d'identification Gen ID comporte des moyens pour détecter quelle borne est réellement connectée à la ligne correspondante du bus sur le sous-ensemble SE du connecteur C.

A cet effet, le générateur de signaux de sélection Sel comporte un moyen pour effectuer un balayage des différentes bornes d'entrée du sous-ensemble SE en plaçant successivement chacune des lignes du bus interne BSE connecté au sous-ensemble SE de bornes du connecteur C, à un potentiel de référence de façon à pouvoir détecter si la borne est réellement connectée à la ligne de bus ou non. Il en résulte une succession de signaux logiques, à la valeur VRAI si la borne interrogée est connectée à la ligne de bus ou à la valeur FAUX si la borne interrogée n'est pas connectée. La succession des signaux logiques de détection de positions relatives des bornes connectées dans le sous-ensemble de bornes SE est utilisé par le circuit pour générer un donnée numérique unique identifiant le module électronique.

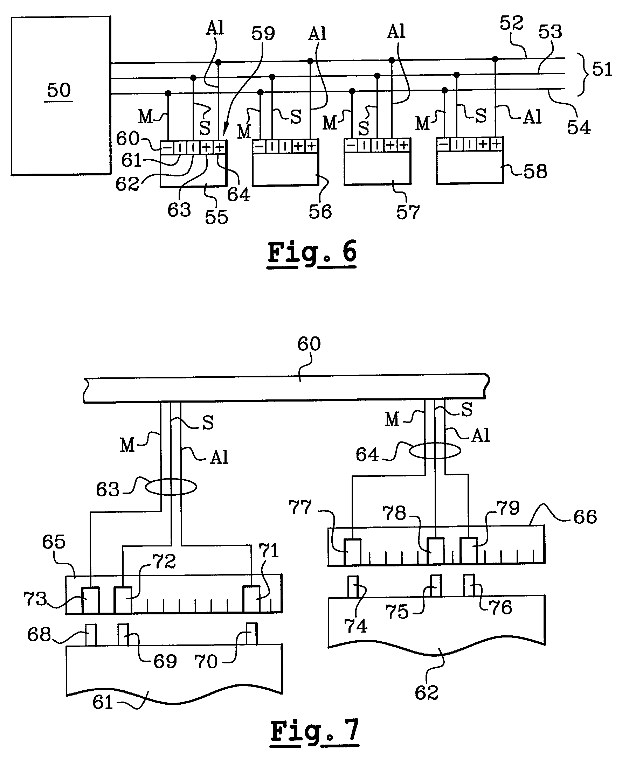

A la figure 6, on a représenté un mode de réalisation particulier d'un réseau à bus multiplexé à plusieurs lignes et qui comporte des modules électroniques, ici au nombre de quatre, dont chacun comporte un dispositif de configuration selon l'enseignement de la figure 5. A cet effet, le réseau comporte un dispositif maître 50 duquel part un bus 51 constitué de trois lignes respectivement 52 d'alimentation en tension positive, 53 de masse d'alimentation, et 54 de signal. La ligne 54 peut être une ligne unique sur laquelle transmise une modulation particulière ou une pluralité de ligne de signaux.

Chaque module électronique 55 - 58 comporte un connecteur comme le bornier 59 pour le module 55 et qui comporte trois sous-ensembles de bornes de connexion, respectivement les bornes 60 pour un premier sous-ensemble qui est connecté par une ligne L à la ligne de masse, les bornes 61 et 62 qui constituent un second sous ensemble sont destinées à être connectées par une ligne S à la ligne des signaux 53, et une borne 63 et 64 qui constitue un troisième sous-ensemble de bornes qui sont destinées à être connectées à au moins une ligne Al d'alimentation positive sur la ligne 52 du bus 51.

Chacun des quatre modules utilise un bornier du même type, ce qui permet de ne pas avoir à réaliser de détrompeurs ou de connecteurs spéciaux comme dans le cas de l'état de la technique représenté à la figure 4.

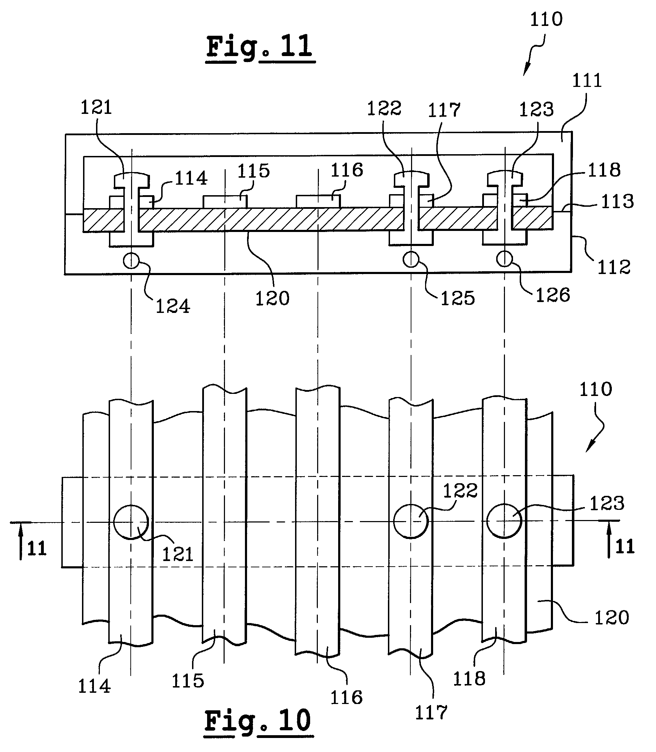

Aux figures 10 et 11, on a représenté un mode de réalisation d'un connecteur monté sur un circuit souple sur lequel a été disposé le bus du réseau. La figure 10 correspond à une vue de face, en coupe partielle, tandis que la figure 11 correspond à une vue de dessus, partielle.

Le bus du réseau est dans l'exemple représenté de ce mode de réalisation de l'invention constitué par cinq pistes conductrices 114 à 118, constituées par une mince couche d'un alliage conducteur déposé sur un substrat 120 souple isolant réalisé en un matériau polymère comme un poly imide. Le circuit souple peut être en tout point de son développement associé avec un connecteur 110 composé en deux parties, respectivement, une parte inférieure 11 et une partie supérieure 112, qui entourent, autour d'une liaison 113 comme une liaison à cliquet, à la façon d'un étrier le circuit souple 120 ; 14 à 118.

Dans l'exemple de réalisation des figures 10 et 11, le réseau est un réseau de type "trois fils" dont deux fils sont, selon l'invention, démultipliés de sorte que :
- les pistes 114 et 115 sont des fils de polarisation positive à +Vbatt connectés tous les deux à la borne convenable du circuit générateur d'alimentation comme la batterie du véhicule si le dispositif de l'invention est installé sur un véhicule ;
- les pistes 116 et 117 sont des fils de signal connectés à la borne d'échange de signaux +S du réseau de commande du réseau embarqué à bord du véhicule ;
- la piste 118 est un fil de masse connecté à la borne de masse du circuit générateur d'alimentation comme la batterie du véhicule si le dispositif de l'invention est installé sur un véhicule.

En application de l'invention, selon l'identification du module auquel le connecteur 110 doit être associé, seuls trois des cinq fils du bus 120 ; 114-118 doivent être connectés à trois bornes convenables du module électronique (non représenté à la figure 10) auquel est associé le connecteur 110. On dispose donc de quatre possibilités de connexion pour quatre modules, possibilités qui sont décrites dans le tableau suivant dans lequel chaque possibilité de connexion d'un module est noté de #1 à #4 et chacune des 5 lignes du bus sont reportées de sorte que les lignes auxquelles est raccordé chaque module #i est notée "x" :

| Identification du module | #1 | #2 | #3 | #4 |
|---|---|---|---|---|
| '114 | x | | x | |
| '115 | | x | | x |
| '116 | x | x | | |
| '117 | | | x | x |
| '118 | x | x | x | x |

Dans ce mode de réalisation, le circuit de configuration de chacun des modules électroniques #1 à #4 comporte un circuit pour détecter quelle ligne ou borne est connectée aux lignes '114, '115, '116, '117 ou '118, sachant que une seule ligne ou borne d'une polarité ou d'un type de signal, s'il y en a de plusieurs sortes sur le bus, est raccordée au module électronique #i.

Pour augmenter le nombre de modules connectables sur le réseau avec une adresse unique, l'invention ainsi qu'il sera décrit plus loin permet aussi dans une autre variante non représentée ici, de détecter le nombre de bornes qui sont connectées à un même potentiel ou à un même type de signal. Il en résulte que, dans les schémas des figures 10 et 11, la connexion d'un seul connecteur 110 par deux bornes convenables aux lignes '114 et '115 est différenciée par le circuit de configuration de la connexion à une seule de ces deux lignes, ce qui augmente encore ici le nombre de cas à 9 modules électroniques de #1 à #9.

D'une manière générale, le réseau de l'invention comporte un contrôleur de bus, un bus à plusieurs lignes et au moins un module électronique équipé d'un circuit de configuration. Le bus comporte une redondance de lignes de sorte que l'adresse de chaque module électronique est réalisée par le schéma de connexion du module électronique au bus du réseau. L'adresse est alors reconnue localement par le circuit de configuration du module électronique.

Pour relier électriquement le module électronique #i (non représenté à la figure 10) à son connecteur 110, et plus particulièrement le circuit de configuration de l'invention qui équipe ce module électronique, on utilise ainsi qu'il est connu trois poinçons de sertissage 121 à 123 qui sont composés chacun en deux parties sensiblement cylindriques et coaxiales (non représentées) qui sont montées l'une à l'autre à force et à travers un perçage pratiqué, par exemple, mais non obligatoirement, lors du montage du connecteur 110 à travers le circuit souple de bus 120 ; 114-118. Chaque partie cylindrique est terminée par une tête, visible au dessin de sorte qu'une fois serrées l'une dans l'autre, et de part et d'autre du circuit souple 120 ; 114-118, les deux parties cylindriques de chaque poinçon de sertissage 121 à 123 forment chacune une pièce intégrale conductrice en liaison électrique avec la piste conductrice 114 à 118 à laquelle elle est connectée.

Enfin, une liaison électrique (non représentée) permet de relier électriquement l'extrémité conductrice d'un fil souple (non représenté) à l'un des poinçon 121 à 123 et le fil est amené de manière connue par des passages 124 à 126 au module électronique #i auquel le connecteur 110 est associé et plus particulièrement au circuit de configuration de l'invention dont le module #i est équipé pour permettre son adressage univoque par le réseau embarqué.

En revenant à la figure 6, dans un autre mode de réalisation, chaque borne 60 à 64 du bornier 59 est connecté directement à une ligne conductrice M, S ou AL. La ligne AL d'alimentation positive peut être connectée ou bien à la borne 3 ou bien à la borne 4, ce qui fait deux possibilités de connexions différentes. De même, la ligne S de signal peut être connectée ou bien à la borne 62 ou bien à la borne 61, ce qui fait deux autres possibilités.

Ainsi, par croisement des cas de connexion des lignes Al et S, la ligne M étant toujours connectée à la première borne à gauche de chacun des borniers, on constate que quatre modules électroniques peuvent être, de manière unique, connectés au bus à trois fils et reconnus séparément et distinctement par le maître 50.

Selon l'invention, pour augmenter la capacité du réseau à connecter des modules électroniques, on augmentera :
- le nombre de bornes de chaque sous-ensemble de bornes attribués à une même ligne du bus ; ou
- le nombre de lignes du bus qui sont affectées à des sous-ensembles distincts de bornes de connexion aux modules.

Dans un autre mode de réalisation, on ajoute un troisième moyen pour augmenter la capacité du réseau à connecter des modules électroniques selon lequel plusieurs bornes homologues d'un même sous-ensemble peuvent être connectées en même temps à la même ligne de signal. Il en résulte une augmentation conséquente du nombre potentiel de modules électroniques à connecter au même réseau.

Il est clair que le dispositif de configuration de chacun des modules électroniques est réalisé selon l'enseignement de la figure 5. Dans le mode de réalisation de la figure 5, seul un sous-ensemble de bornes SE a été prévu. Dans d'autres cas, comme à la figure 6, deux ou plus sous-ensembles de bornes sont prévus. Les moyens du dispositif de configuration qui ont été décrits sont répétés simplement pour chacun des sous-ensembles de bornes analysés, et particulièrement, un générateur de paramètre d'identification global réalise une combinaison logique des différents générateurs d'identification pour chacun des sous-ensembles de façon à constituer, par exemple à l'aide d'un OU logique un mot binaire représentant de manière unique l'adresse du module électronique dans le réseau.

A la figure 7, on a représenté une variante dans laquelle chaque module électronique 61 ou 62 du réseau comporte un connecteur mâle composé de trois bornes respectivement 68, 69 70 pour le module 61 et 74, 75 et 76 pour le module 62.

Le bus 60 à trois fils porte des faisceaux de dérivation respectivement 63 et 64 dont chacun est terminé à son extrémité libre par un connecteur femelle 65 pour le faisceau 63 et 66 pour le faisceau 64. Chaque faisceau 63, 64 comporte les mêmes signaux M, S et Al décrits à l'aide de la figure 6.

Le connecteur femelle 65 ou 66 comporte trois bornes 71-73 pour le connecteur 65 et trois bornes 77 - 79 pour le connecteur 66. Les bornes de chaque connecteur femelle 65 ou 66 sont réparties géométriquement de manière à s'adapter à un seul connecteur mâle installé sur chacun des modules électronique 61 ou 62.

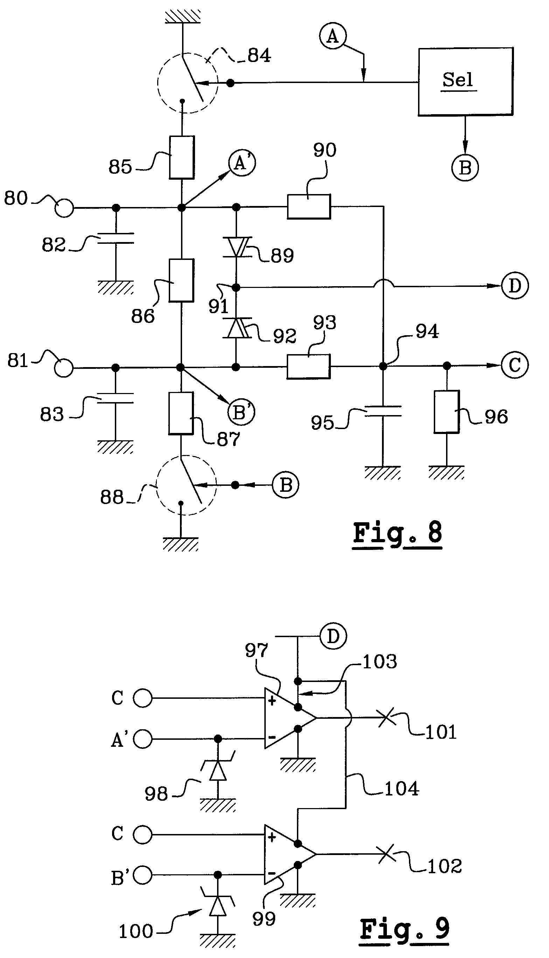

Aux figures 8 et 9, on a représenté un mode particulier de réalisation d'un dispositif de configuration adapté à un module électronique de l'exemple de réalisation de réseau de la figure 6. En particulier, le dispositif de configuration est étudié ici sur la base d'un sous-ensemble de bornes associé à une connexion à une tension d'alimentation positive en électricité continue. Il est clair d'une part que, dans le cas d'une alimentation négative, le même dispositif peut être utilisé en changeant les polarisations, et d'autre part que, pour une ligne de signaux, des filtres permettant d'obtenir des valeurs moyennes ou permettant de sélectionner des trames temporelles dans lesquelles une valeur positive d'alimentation et détectée peut être utilisée pour opérer la même fonction sur une ligne de signal comme la ligne S.

A la figure 8, on a représenté les deux bornes 80 et 81 du sous-ensemble de bornes dont on va premièrement tirer une ligne de reconstruction D et deuxièmement, un code 101, 102 représenté à la figure 9, représentatif de manière unique d'une partie de code permettant d'identifier le module selon la borne connectée entre la borne 80 et la borne 81. Il est clair que les bornes 80 et 81 du circuit de configuration sont directement connectées aux bornes convenables du sous-ensemble concerné sur le connecteur associé du module.

Chaque borne 80 et 81 est connectée à la masse par l'intermédiaire d'un condensateur de filtrage 82, 83 et à des points de potentiel A' et B' connectés sur une échelle de résistances 85, 86 et 87. Le point de potentiel A' est connecté à l'anode d'une première diode 89 tandis que l'anode d'une seconde diode 92 est connectée au noeud B'. Les deux diodes 89 et 92 permettent de produire une ligne unique reconstruite D qui est la ligne d'alimentation positive locale du module.

Les cathodes des diodes 89 et 92 sont connectées ensembles sur un noeud 91. Les anodes des diodes 89 et 92 sont connectées à un noeud 94 par l'intermédiaire de résistance 90 et 93, tandis que le noeud 94 est connecté à une borne notée C qui sera exploitée dans le circuit suivant représenté à la figure 9.

Le noeud 94 est par ailleurs connecté à la masse par l'intermédiaire d'un circuit parallèle composé d'une résistance 96 et d'un condensateur 95.

On génère ainsi lors la connexion du module sur le réseau une tension continue protégée qui permet de détecter laquelle des deux bornes 80 ou 81 est réellement connectée.

A cet effet, l'échelle de résistances 85 à 87 est connectée à la masse à ses deux extrémités libres par l'intermédiaire d'interrupteurs commandés 84 et 88. Dans un mode de réalisation non représenté au dessin, un seul des deux interrupteurs est 84 ou 88 est monté ou contrôlé dans le circuit de configuration de l'invention. Cependant, pour équilibrer le fonctionnement du circuit, selon les polarités d'alimentation (cas d'une alimentation bipolaire notamment) il est ici (cas d'une alimentation unipolaire sur masse électrique) préférable de disposer de deux interrupteurs 84 et 88.

Chaque interrupteur commandé 84 ou 88 est préférentiellement réalisé à l'aide d'un transistor Mos de type N avec une diode de protection antiparallèle entre son drain et sa source. La grille de chaque transistor Mos est connectée à une sortie A pour l'interrupteur 84 et à une sortie B pour l'interrupteur 88 à un générateur Sel de signaux de sélection.

La mise à l'état actif de chaque signal de sélection A ou B commande l'analyse de la présence d'une tension d'alimentation sur la borne 80 ou sur la borne 81. Ainsi, lorsque le signal A est actif, le circuit de la figure 8 est placé à la masse entre le noeud A' et l'interrupteur 84. Il en résulte une première tension sur le noeud 94 qui peut être mesurée ultérieurement.

Si le signal n'est pas connecté sur la borne 80 mais sur la borne 81, une autre mesure de tension au noeud C sera obtenue en lisant la tension qui existe du fait de la fermeture de l'interrupteur 88 qui place le noeud B' à la masse à travers une résistance 87. Il en résulte une seconde valeur de tension qu'il est possible de détecter par les mêmes moyens.

Il en résulte aussi que, par détection des tensions au noeud 94, on sait si la ligne d'alimentation de batterie est connectée sur la borne 80 ou la borne 81, image du sous-ensemble de borne sur laquelle la ligne a été préalablement connectée sur le module.

A la figure 9, on a représenté un tel moyen de comparaison de tension.

A la figure 9, on a représenté deux amplificateurs opérationnels 97 et 99 qui sont connectés en comparateurs de tension et dont une première borne positive de chacun d'eux est connectée au noeud 94 par l'intermédiaire du point C.

Les secondes bornes d'entrées négatives de chacun des comparateurs 97 ou 99 sont respectivement connectées au noeud A' pour le comparateur 97 et au noeud B' pour le comparateur 99.

Chacune des bornes d'entrée est de même connectée à la masse par l'intermédiaire d'une diode Zener 98 ou 100.

La comparaison des tensions permet par ce moyen de détecter si la borne 80 ou 81 est connectée en détectant une valeur logique active sur la borne 101 ou sur la borne 102.

Quand plusieurs sous-ensembles de bornes sont connectés, les moyens de comparaison sont connectés ensemble par l'intermédiaire d'une porte OU de façon à composer un mot d'identification unique caractéristique du module électronique.

Dans un mode de réalisation, le réseau comporte aussi un moyen pour détecter, après la reconnaissance de l'adresse du module électronique, d'un état de défaillance sur l'une des lignes du bus connectées à un module électronique, par la détection d'un identificateur erroné du module électronique. Dans un exemple de réalisation, les bornes d'alimentation positive en courant continu et de masse sont en plus connectées à un actionneur électromécanique. Dans une telle situation, les moyens de l'invention permettent en plus, par la reconnaissance de l'adresse, de détecter des états de pannes de l'actionneur.

Lorsqu'un actionneur n'est pas connecté, l'émetteur du réseau comme l'émetteur 50 selon le mode de réalisation de la figure 5, envoie un signal d'interrogation des modules. Chaque module peut répondre à ce moment là à l'aide d'un signal particulier émis selon le protocole admis sur le réseau.

Si le module n'est plus connecté, une telle réponse est alors impossible et la panne peut alors immédiatement être détectée au niveau de l'organe central d'interrogation 50.

On remarque qu'il n'est pas utile de multiplier les lignes du faisceau pour augmenter le nombre de module, mais qu'au contraire il suffit d'augmenter le nombre de bornes sur les modules de façon à augmenter la combinatoire des divers sous-ensembles.

Lorsqu'un module électronique équipé d'un circuit de configuration selon l'invention est connecté au bus du réseau embarqué constitué avec une redondance de fils ainsi qu'il a été expliqué, l'adressage du module est fait lors de la mise sous tension par un module d'interrogation du contrôleur de réseau. Puis, lors du fonctionnement du réseau, le contrôleur de réseau produit des vérifications de sorte que le module électrique soit interrogé et réponde s'il est correctement connecté. Si une connexion devient défaillante, l'adresse du module change et peut en particulier entrer en conflit avec une adresse déjà affectée ou prendre une adresse encore libre, mais réservée à un autre module pour une autre configuration du réseau. Pour détecter de telles situations, le contrôleur de réseau est équipé d'un module de détection de la constance de l'adresse de chaque module électronique connecté au bus du réseau qui conserve la mémoire des adresses des modules électroniques déjà connectés, et le cas échéant l'adresse réservée de modules électroniques pour d'autres configurations du réseau.

On remarque aussi que, selon l'invention, le fait de connecter un nouveau module électronique, ou un module électronique supplémentaire suffit pour que le réseau reconnaisse par son contrôleur de réseau la nouvelle adresse dès la mise sous tension sans qu'une procédure d'attribution d'adresse soit effectuée au niveau du contrôleur de réseau. Ce dernier ne fait que détecter d'éventuelles adresses invalides ou en conflit comme il a été décrit plus haut. On évite ainsi des procédures souvent délicates de détermination d'adresses dans l'état de la technique.

On remarque aussi que le bus peut être facilement standardisé sans qu'il soit nécessaire que les modules électroniques qui lui sont destinés soient tous prévus à l'avance. Il suffit que la redondance des lignes du bus et que les techniques de configuration mises en oeuvre dans le circuit de configuration de l'invention permettent un nombre supplémentaires d'adresses pour ajouter de nouveaux modules. Ainsi sur un véhicule, un seul bus peut être étudié et installé sur tous les modèles d'une marque ou d'une gamme de la marque. Selon les options choisies par le constructeur chaque modèle de la marque ou de la gamme considérée dans la marque sera équipé du nombre souhaité et du type choisi de modules électroniques équipés chacun du circuit de configuration convenable.

## Revendications

1. Dispositif de configuration (D) d'un module électronique (M) dans un réseau du genre comportant un bus multiplexé à plusieurs lignes, **caractérisé en ce qu'**il comporte :
- un connecteur (C) comportant, pour au moins une ligne du bus multiplexé, un nombre déterminé de bornes dont seul un sous-ensemble (SE) est connecté à ladite ligne ;
- un circuit (Gen Lig) pour reconstituer (Ligne_Rec) la ligne connectée au dit sous-ensemble de bornes (SE), et la connecter au reste du module (M) ;
- un circuit (Gen ID) pour détecter les positions relatives des bornes connectées dans le dit sous-ensemble de bornes ; et
- un circuit (Gen ID) pour générer une donnée numérique unique (ID_Par), sur la base de la détection des positions relatives des bornes connectées, identifiant le module électronique.

2. Dispositif selon la revendication 1, **caractérisé en ce que** le circuit de reconstitution de lignes (Gen Lig) comporte un circuit dans lequel N entrées qui sont toutes au même potentiel ou à un potentiel flottant sont rassemblées en une seule ligne de sortie au moyen d'un circuit de combinaison à diodes pour protéger les entrées.

3. Dispositif selon la revendication 1, **caractérisé en ce que** le dispositif comporte un générateur de signaux de sélection (Gen Sel) qui est connecté par un bus (Sel) aux entrées convenables respectivement du circuit de reconstitution de lignes (Gen Lig), d'une part, et du circuit générateur de paramètre d'identification (Gen ID), d'autre part, et **en ce que** le générateur de signaux de sélection (Sel) comporte un moyen pour effectuer un balayage des différentes bornes d'entrée du sous-ensemble (SE) en plaçant successivement chacune des lignes du bus interne (BSE) connecté au sous-ensemble (SE) de bornes du connecteur (C), à un potentiel de référence de façon à détecter si la borne est réellement connectée à la ligne de bus ou non, un moyen pour générer une succession de signaux logiques, à la valeur VRAI si la borne interrogée est connectée à la ligne de bus ou à la valeur FAUX si la borne interrogée n'est pas connectée, de sorte que la succession des signaux logiques de détection de positions relatives des bornes connectées dans le sous-ensemble de bornes (SE) est utilisé par le circuit pour générer un donnée numérique unique identifiant le module électronique.

4. Dispositif selon l'une des revendications 2 ou 3, **caractérisé en ce que**, au moins deux sous-ensembles de bornes étant prévus, le dispositif de configuration comporte aussi un générateur de paramètre d'identification global qui réalise une combinaison logique des différents générateurs d'identification pour chacun des sous-ensembles de façon à constituer, par exemple à l'aide d'un OU logique un mot binaire représentant de manière unique l'adresse du module électronique dans le réseau.

5. Dispositif selon l'une des revendications précédentes, **caractérisé en ce que** chaque module électronique (61, 62) comporte un connecteur composé de bornes (68 - 70 ; 74 - 76), chaque faisceau (63, 64) portant un connecteur réciproque ( )65, 66) composé de bornes (71-73 ; 77 - 79) de sorte que les bornes de chaque connecteur réciproque (65, 66) soient réparties géométriquement de manière à s'adapter à un seul connecteur installé sur chacun des modules électroniques (61, 62).

6. Dispositif selon la revendication 2 ou 3, **caractérisé en ce que** le dispositif de configuration comporte des bornes (80, 81) connectées à la masse par l'intermédiaire d'un condensateur de filtrage (82, 83) et à des points de potentiel (A' et B') connectés sur une échelle de résistances (85, 86 et 87), le point de potentiel (A') étant connecté à l'anode d'une première diode (89) tandis que l'anode d'une seconde diode (92) est connectée au noeud (B'), les deux diodes (89 et 92) permettant de produire une ligne unique reconstruite (D) au noeud commun (91) de leurs cathodes des diodes (89 et 92) sont connectées ensemble sur un noeud (91).

7. Dispositif selon la revendication 6, **caractérisé en ce que** les anodes des diodes (89, 92) sont connectées à un noeud (94) par l'intermédiaire de résistances (90, 93), tandis que le noeud (94) est connecté à la masse par l'intermédiaire d'un circuit parallèle composé d'une résistance (96) et d'un condensateur (95), deux amplificateurs opérationnels (97, 99) étant connectés en comparateurs de tension et dont une première borne positive de chacun d'eux est connectée au noeud (94) les secondes bornes d'entrées négatives de chacun des comparateurs (97, 99) étant respectivement connectées au noeud (A') pour le comparateur (97) et au noeud (B') pour le comparateur (99) et à la masse par l'intermédiaire d'une diode Zener (98 ou 100), de sorte que la comparaison des tensions permet par ce moyen de détecter si la borne 80 ou 81 est connectée en détectant une valeur logique active sur la borne 101 ou sur la borne 102.

8. Dispositif selon la revendication 6 ou 7, **caractérisé en ce que** l'échelle de résistances (85 - 87) est connectée à la masse à ses deux extrémités libres par l'intermédiaire d'interrupteurs commandés (84, 88) par un générateur (Sel) de signaux de sélection.

9. Réseau à bus multiplexé à plusieurs lignes, **caractérisé en ce qu'**il comporte une pluralité de modules électroniques, chaque module électronique comportant un dispositif de configuration selon l'une au moins des revendications précédentes et **en ce que** le bus comporte une redondance de lignes de sorte que l'adresse de chaque module électronique soit réalisée par le schéma de connexion du module électronique au bus du réseau, ladite adresse étant reconnue localement par le circuit de configuration du module électronique.

10. Réseau selon la revendication précédente, **caractérisé en ce qu'**il comporte un moyen pour détecter, après la reconnaissance de l'adresse, un état de défaillance sur l'une des lignes du bus connectées à un module électronique, par la détection d'un identificateur erroné.

11. Réseau selon la revendication 9 ou 10, **caractérisé en ce qu'**il comporte un contrôleur de réseau équipé d'un module de détection de la constance de l'adresse de chaque module électronique connecté au bus du réseau qui conserve la mémoire des adresses des modules électroniques déjà connectés, et le cas échéant l'adresse réservée de modules électroniques pour d'autres configurations du réseau.

12. Réseau selon l'une des revendications 9 à 11, **caractérisé en ce que** le bus du réseau est réalisé à l'aide d'un circuit souple comportant un substrat isolant souple (120) sur lequel sont disposés une pluralité de lignes d'alimentation et de signal multiplexé avec redondance, **en ce que** chaque module électronique est équipé d'un circuit de configuration et est connecté au bus du réseau par un connecteur (110) et **en ce que** chaque borne (124 - 126) du connecteur (110) est connecté à au moins une polarité ou type de signal par l'intermédiaire d'un poinçon de sertissage (121 - 123).

13. Réseau selon la revendication 12, **caractérisé en ce que** le circuit de configuration de chacun des modules électroniques (#1 à #4) comporte un circuit pour détecter quelle ligne ou borne est connectée aux lignes ('114, '115, '116, '117 ou '118), sachant que une seule ligne ou borne d'une polarité ou d'un type de signal, s'il y en a de plusieurs sortes sur le bus, est raccordée au module électronique (#i).

14. Réseau selon la revendication 13, **caractérisé en ce que**, pour augmenter le nombre de modules connectables sur le réseau avec une adresse unique, le circuit de configuration comporte aussi un moyen pour détecter le nombre de bornes qui sont connectées à un même potentiel ou à un même type de signal.
